(19) Europäisches Patentamt
European Patent Office
Office européen des brevets

(11) **EP 4 071 579 A1**

(12) **EUROPEAN PATENT APPLICATION**

(43) Date of publication:
**12.10.2022 Bulletin 2022/41**

(21) Application number: **22166964.1**

(22) Date of filing: **06.04.2022**

(51) International Patent Classification (IPC):
**G05F 1/67** (2006.01)   **G06N 3/02** (2006.01)

(52) Cooperative Patent Classification (CPC):
**H02S 20/32;** G06N 3/02; H02J 2300/26;
H02S 40/30

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.04.2021 CN 202110373843**

(71) Applicant: **Huawei Digital Power Technologies
Co., Ltd.
Shenzhen, 518043 (CN)**

(72) Inventors:
• **SUN, Wuben
Shenzhen, 518129 (CN)**

• **WAN, Song
Shenzhen, 518129 (CN)**
• **YIN, Kai
Shenzhen, 518129 (CN)**
• **ZHANG, Yanzhong
Shenzhen, 518129 (CN)**
• **LIU, Huiping
Shenzhen, 518129 (CN)**
• **ZHENG, Yue
Shenzhen, 518129 (CN)**

(74) Representative: **Epping - Hermann - Fischer
Patentanwaltsgesellschaft mbH
Schloßschmidstraße 5
80639 München (DE)**

(54) **PHOTOVOLTAIC MODULE CONTROL METHOD AND PHOTOVOLTAIC SYSTEM**

(57) This application provides a photovoltaic module control method and a photovoltaic system. The photovoltaic system includes the photovoltaic module, an electric energy conversion apparatus, an inverter, and a computing device. The method includes: The computing device determines whether output power of the photovoltaic module meets a first preset condition, where the first preset condition is that the output power is greater than or equal to a first preset output power; when the first preset condition is met, the computing device determines to set the photovoltaic module to a default configuration direction, where the default configuration direction is a photovoltaic module orientation in which sunlight is irradiated onto the photovoltaic module with a minimum incident angle; and when the first preset condition is not met, the computing device determines to set the photovoltaic module to a target orientation, where the target orientation is different from the default configuration direction. The photovoltaic module orientation is determined based on the output power of the photovoltaic module, so that energy yield of the photovoltaic module per unit time can be improved, dependence on weather data can be avoided, and system costs can be reduced.

A computing device determines whether output power of a photovoltaic module meets a first preset condition, where the first preset condition is that the output power is greater than or equal to first preset output power — S110

When the output power meets the first preset condition, the computing device determines to set the photovoltaic module to a first working mode, where the first working mode refers to setting an orientation of the photovoltaic module to a default configuration direction, and the default configuration direction is a photovoltaic module orientation in which sunlight is irradiated onto the photovoltaic module with a minimum incident angle — S120

When the output power does not meet the first preset condition, the computing device determines to set the photovoltaic module to a second working mode, where the second working mode refers to setting the orientation of the photovoltaic module to a target orientation, and the target orientation is different from the default configuration direction — S130

FIG. 2

EP 4 071 579 A1

# Description

## TECHNICAL FIELD

This application relates to the energy field, and more specifically, to a photovoltaic module control method and a photovoltaic system.

## BACKGROUND

A photovoltaic system includes a photovoltaic module, an electric energy conversion apparatus, and an inverter. The photovoltaic module converts light energy into electric energy, and outputs a direct current (direct current, DC). The electric energy conversion apparatus is configured to perform voltage conversion on the direct current output by the photovoltaic module. The inverter converts a direct current output by the electric energy conversion apparatus into an alternating current.

An area of the photovoltaic module is fixed, and when light intensity of a light ray remains unchanged, a larger included angle between a light ray irradiated onto the photovoltaic module and a plane on which the photovoltaic module is located, that is, a smaller incident angle of the light ray, leads to more electric energy output by the photovoltaic module. When a light ray is vertically irradiated onto the photovoltaic module, that is, when an included angle between the light ray and the plane on which the photovoltaic module is located is 90°, which reaches a maximum value, output power of the photovoltaic module reaches a maximum.

A solar azimuth may be determined based on a location of the photovoltaic module and a time, and an orientation of the photovoltaic module is adjusted based on the solar azimuth, so that the photovoltaic module faces a direction of the sun. That is, the photovoltaic module is disposed in an orientation in which an included angle between a normal direction of the photovoltaic module and a solar ray is minimized, so that intensity of light received by the photovoltaic module may be maximized, and input power of a photovoltaic power generation system may be increased, thereby increasing a power generation capacity of the photovoltaic power generation system in unit duration.

However, in a non-ideal weather condition such as an overcast day or a cloudy day, a cloud layer or the like blocks and diffusely reflects solar rays. Propagation directions of the solar rays are changed after diffuse reflection. Therefore, in the non-ideal weather condition, a photovoltaic module orientation in which the intensity of the light received by the photovoltaic module is maximized is not the photovoltaic module orientation in which the included angle between the normal direction of the photovoltaic module and the solar ray is minimized. Therefore, the photovoltaic module orientation is adjusted based on real-time weather data, so that a power generation capacity of the photovoltaic module in a unit time may be further increased.

However, the weather data affects the photovoltaic module orientation, and accuracy of the weather data affects accuracy of control of the photovoltaic module orientation.

## SUMMARY

This application provides a photovoltaic module control method and a photovoltaic system, to prevent control of a photovoltaic module orientation from relying on weather data.

According to a first aspect, a photovoltaic module control method is provided, and is applied to a photovoltaic system. The photovoltaic system includes a photovoltaic module, an electric energy conversion apparatus, and an inverter. The photovoltaic module is configured to convert light energy into a direct current. The electric energy conversion apparatus is configured to perform voltage conversion on the direct current output by the photovoltaic module. The inverter is configured to convert a direct current output by the electric energy conversion apparatus into an alternating current, and supply power to a power grid. The method includes: A computing device determines whether output power of the photovoltaic module meets a first preset condition, where the first preset condition is that the output power is greater than or equal to first preset output power; when the output power meets the first preset condition, the computing device determines to set the photovoltaic module to a first working mode, where the first working mode refers to setting an orientation of the photovoltaic module to a default configuration direction, and the default configuration direction is a photovoltaic module orientation in which sunlight is irradiated onto the photovoltaic module with a minimum incident angle; and when the output power does not meet the first preset condition, the computing device determines to set the photovoltaic module to a second working mode, where the second working mode refers to setting the orientation of the photovoltaic module to a target orientation, and the target orientation is different from the default configuration direction.

The default configuration direction in which sunlight is irradiated onto the photovoltaic module with a minimum incident angle can maximize the output power of the photovoltaic module in sunny weather in which light ray refraction and diffuse reflection are relatively weak. However, in an overcast day condition in which refraction and diffuse reflection are relatively strong, the output power of the photovoltaic module disposed in the default configuration direction is relatively low. Stronger refraction and diffuse reflection of sunlight by the atmosphere leads to smaller intensity of light that can be received by the photovoltaic module. The output power of the photovoltaic module is positively correlated with intensity of light received by the photovoltaic module. When the output power of the photovoltaic module is relatively large and is greater than or equal to the first preset output power, it is determined that a weather condition is good, and the photovoltaic module may be disposed in the default configuration direction. When the output power of the photovoltaic module is relatively small and is less than the first preset output power, it is determined that the weather condition is relatively poor, and the photovoltaic module may no longer be disposed in the default configuration direction.

Values of the output power of the photovoltaic module and the first preset output power are compared, and the weather condition may be determined based on a comparison result, to determine the orientation of the photovoltaic module, so that the output power of the photovoltaic module can be increased. Therefore, direction adjustment of the photovoltaic module to increase the output power of the photovoltaic module no longer relies on weather data.

With reference to the first aspect, in some possible implementations, the method further includes: The computing device obtains electrical parameter information of the photovoltaic module, where the electrical parameter information has an association relationship with the output power, and the electrical parameter information includes at least one of the following: an output current of the photovoltaic module, an output voltage of the photovoltaic module, and the output power. That a computing device determines whether output power of the photovoltaic module meets a first preset condition includes: The computing device determines that the output power meets the first preset condition in at least one of the following cases: the output current is greater than or equal to a preset output current, the output voltage is greater than or equal to a preset output voltage, and the output power is greater than or equal to the first preset output power.

The electrical parameter information that has the association relationship with the output power of the photovoltaic module is used to determine whether the output power of the photovoltaic module meets the first preset condition, thereby improving flexibility of a determining manner.

With reference to the first aspect, in some possible implementations, the photovoltaic module is a single-sided module, and the method further includes: The computing device determines a preset angle coefficient k, where k is greater than 0 and less than 1; and the computing device determines the target orientation based on the preset angle coefficient, where an included angle $\alpha$ between the target orientation and a vertical direction is $\alpha = k\beta$, $\beta$ is an included angle between the default configuration direction and the vertical direction, and the vertical direction is a direction perpendicular to the horizon.

The output power of the photovoltaic module can be increased by disposing the single-sided module in a target direction between the default configuration direction and the vertical direction when the weather condition is relatively poor.

With reference to the first aspect, in some possible implementations, when the output power does not meet the first preset condition, the method further includes: The computing device inputs first data to a neural network model, where the first data includes first time information and electrical parameter information, the electrical parameter information has an association relationship with the output power, and the first time information is used to indicate a first time at which the photovoltaic module outputs the output power; and the computing device determines the target orientation based on an output of the neural network model. The neural network model is obtained through training based on a data set, the data set includes a plurality of pieces of training data, and each piece of training data includes time training information, electrical parameter training information, and tagged orientation information. The time training information is used to indicate a training time. The electrical parameter training information is used to indicate a training electrical parameter of a training photovoltaic module at the training time, and the training electrical parameter has an association relationship with training output power output by the training photovoltaic module at the training time. The tagged orientation training information is used to indicate a tagged orientation, and the tagged orientation is an orientation of the training photovoltaic module in which output power of the training photovoltaic module reaches a maximum value at the training time.

The neural network model is trained by using the data set, and the neural network model processes the first data to obtain the target orientation, thereby improving accuracy of the target orientation, so that the output power of the photovoltaic module can be further increased.

With reference to the first aspect, in some possible implementations, each piece of training data in the plurality of pieces of training data further includes geographical location training information, the geographical location training information is used to indicate a geographical location of the training photovoltaic module, and at least two pieces of geographical location training information in the plurality of pieces of training data are different. The first data further includes geographical location information of the photovoltaic module, and the geographical location information is used to indicate a geographical location of the photovoltaic module.

The data set used to train the neural network model includes the geographical location training information indicating different geographical locations, so that the neural network model can process photovoltaic modules at different locations, and there is no need to separately perform training for a photovoltaic module at a specific location, thereby reducing costs.

The geographical location information of the photovoltaic module affects the target orientation. The first data includes geographical location information of at least one photovoltaic module, so that the determined target orientation is more accurate.

With reference to the first aspect, in some pos-

5 EP 4 071 579 A1 6

sible implementations, each piece of training data in the plurality of pieces of training data further includes rated electrical parameter training information of the training photovoltaic module, the rated electrical parameter training information has an association relationship with rated output power of the training photovoltaic module, and at least two pieces of rated electrical parameter training information in the plurality of pieces of training data are different. The first data further includes rated electrical parameter information of the photovoltaic module, and the rated electrical parameter information has an association relationship with rated output power of the photovoltaic module.

The data set used to train the neural network model includes different rated electrical parameter training information, so that the neural network model obtained through training may be applicable to photovoltaic modules of different sizes and types, and there is no need to separately perform training for photovoltaic modules of different types, thereby reducing costs.

Optionally, there is a correspondence between the rated output power of the training photovoltaic module and the training time, and there is a correspondence between the rated output power of the photovoltaic module and the first time.

With reference to the first aspect, in some possible implementations, there is a correspondence between the first preset output power and the first time, and the first time is a time at which the photovoltaic module outputs the output power.

Maximum output power of the photovoltaic module may be different at different times. For example, the maximum output power of the photovoltaic module is different at different moments of a day. For different times, preset output power corresponding to the times is set. A working mode of the photovoltaic module is determined based on the output power of the photovoltaic module and the first preset output power corresponding to the first time at which the photovoltaic module outputs the output power, so that the determined working mode of the photovoltaic module is more accurate.

With reference to the first aspect, in some possible implementations, when the photovoltaic module is in the second working mode, the computing device determines whether the output power meets a second preset condition, where the second preset condition is that the output power is greater than or equal to second preset output power, and the second preset output power is greater than the first preset output power. When the output power meets the second preset condition, the computing device determines to set the photovoltaic module to the first working mode. When the output power does not meet the second preset condition, the computing device determines to set the photovoltaic module to the second working mode.

In different working modes of the photovoltaic module, different preset output power is set to be compared with the output power of the photovoltaic module, to determine whether to change the working mode of the photovoltaic module. If the second preset output power is equal to a first preset ratio, a fluctuation of the output power causes frequent adjustment of the working mode of the photovoltaic module, thereby frequently adjusting the orientation of the photovoltaic module. The second preset output power is set to be greater than the first preset output power, to implement hysteresis control on the working mode of the photovoltaic module, thereby avoiding frequent adjustment of the orientation of the photovoltaic module caused by a weather fluctuation of a relatively small amplitude.

It should be understood that there may be a plurality of photovoltaic modules in the photovoltaic system. The working mode of the photovoltaic module is determined based on output power of the plurality of photovoltaic modules, to reduce an error, improve accuracy of control of the photovoltaic module, and further increase a power generation capacity of the photovoltaic module in a unit time.

According to a second aspect, a photovoltaic system is provided. The photovoltaic system includes a photovoltaic module, an electric energy conversion apparatus, and an inverter. The photovoltaic module is configured to convert light energy into a direct current. The electric energy conversion apparatus is configured to perform voltage conversion on the direct current output by the photovoltaic module. The inverter is configured to convert a direct current output by the electric energy conversion apparatus into an alternating current, and supply power to a power grid. The computing device is configured to determine whether output power of the photovoltaic module meets a first preset condition, where the first preset condition is that the output power is greater than or equal to first preset output power. When the output power meets the first preset condition, the computing device is further configured to set the photovoltaic module to a first working mode, where the first working mode refers to setting an orientation of the photovoltaic module to a default configuration direction, and the default configuration direction is a photovoltaic module orientation in which sunlight is irradiated onto the photovoltaic module with a minimum incident angle. When the output power does not meet the first preset condition, the computing device is further configured to set the photovoltaic module to a second working mode, where the second working mode refers to setting the orientation of the photovoltaic module to a target orientation, and the target orientation is different from the default configuration direction.

With reference to the second aspect, in some possible embodiments, the computing device is further configured to obtain electrical parameter information of the photovoltaic module, where the electrical parameter information has an association relationship with the output power, and the electrical parameter information includes at least one of the following: an output current of the photovoltaic module, an output voltage of the photovoltaic module, and the output power. That a computing

4

device determines whether output power of the photovoltaic module meets a first preset condition includes: The computing device determines that the output power meets the first preset condition in at least one of the following cases: the output current is greater than or equal to a preset output current, the output voltage is greater than or equal to a preset output voltage, and the output power is greater than or equal to the first preset output power.

With reference to the second aspect, in some possible embodiments, the processing module is further configured to: the photovoltaic module is a single-sided module. The computing device is further configured to determine a preset angle coefficient k, where k is greater than 0 and less than 1. The computing device is further configured to determine the target orientation based on the preset angle coefficient, where an included angle α between the target orientation and a vertical direction is α = kβ, β is an included angle between the default configuration direction and the vertical direction, and the vertical direction is a direction perpendicular to the horizon.

With reference to the second aspect, in some possible embodiments, when the output power does not meet the first preset condition, the computing device is further configured to input first data to a neural network model, where the first data includes first time information and electrical parameter information, the electrical parameter information has an association relationship with the output power, and the first time information is used to indicate a first time at which the photovoltaic module outputs the output power. The data set further includes the electrical parameter information of the photovoltaic module, and the electrical parameter information has an association relationship with the output power. The computing device is further configured to determine the target orientation based on an output of the neural network model. The neural network model is obtained through training based on a data set, the data set includes a plurality of pieces of training data, and each piece of training data includes time training information, electrical parameter training information, and tagged orientation information. The time training information is used to indicate a training time. The electrical parameter training information is used to indicate a training electrical parameter of a training photovoltaic module at the training time, and the training electrical parameter has an association relationship with training output power output by the training photovoltaic module at the training time. The tagged orientation training information is used to indicate a tagged orientation, and the tagged orientation is an orientation of the training photovoltaic module in which output power of the training photovoltaic module reaches a maximum value at the training time.

With reference to the second aspect, in some possible embodiments, each piece of training data in the plurality of pieces of training data further includes geographical location training information, the geographical location training information is used to indicate a geographical location of the training photovoltaic module, and at least two pieces of geographical location training information in the plurality of pieces of training data are different. The first data further includes geographical location information of the photovoltaic module, and the geographical location information is used to indicate a geographical location of the photovoltaic module.

With reference to the second aspect, each piece of training data in the plurality of pieces of training data further includes rated electrical parameter training information of the training photovoltaic module, the rated electrical parameter training information has an association relationship with rated output power of the training photovoltaic module, and at least two pieces of rated electrical parameter training information in the plurality of pieces of training data are different. The first data further includes rated electrical parameter information of the photovoltaic module, and the rated electrical parameter information has an association relationship with rated output power of the photovoltaic module.

With reference to the second aspect, in some possible embodiments, there is a correspondence between the first preset output power and the first time, and the first time is a time at which the photovoltaic module outputs the output power.

With reference to the second aspect, in some possible embodiments, when the photovoltaic module is in the second working mode, the computing device is further configured to determine whether the output power meets a second preset condition, where the second preset condition is that the output power is greater than or equal to second preset output power, and the second preset output power is greater than the first preset output power. When the output power meets the second preset condition, the computing device is further configured to set the photovoltaic module to the first working mode. When the output power does not meet the second preset condition, the computing device is further configured to set the photovoltaic module to the second working mode.

According to a third aspect, a chip is provided, including at least one processor and an interface circuit. The interface circuit is configured to provide program instructions or data for the at least one processor, and the at least one processor is configured to execute the program instructions, to implement the method according to the first aspect.

According to a fourth aspect, a computer readable storage medium is provided. The computer readable medium stores program code to be executed by a device, and when the program code is executed by the device, the method according to the first aspect is implemented.

According to a fifth aspect, a computer program product is provided. The computer program product includes a computer program, and when the computer program product is executed by a computer, the computer performs the method according to the first aspect.

According to a sixth aspect, a computing device is provided, and is configured to perform the method according to the first aspect.

The computing device may include a memory and a processor. The memory is configured to store a program, and when the program is executed in the processor, the processor is configured to perform the method according to the first aspect.

It should be understood that, in this application, the method in the first aspect may specifically refer to the method in any one of the first aspect or the implementations of the first aspect.

## BRIEF DESCRIPTION OF DRAWINGS

FIG. 1 is a schematic diagram of a structure of a photovoltaic power generation system;

FIG. 2 is a schematic flowchart of a photovoltaic module control method according to an embodiment of this application;

FIG. 3 is a schematic flowchart of another photovoltaic module control method according to an embodiment of this application;

FIG. 4 is a schematic diagram of a photovoltaic module orientation according to an embodiment of this application;

FIG. 5 is a schematic diagram of generating power of a photovoltaic module according to an embodiment of this application;

FIG. 6 is a schematic flowchart of a neural network model training method according to an embodiment of this application;

FIG. 7 is a schematic flowchart of a photovoltaic module control method according to an embodiment of this application;

FIG. 8 is a schematic diagram of a structure of a photovoltaic module control apparatus according to an embodiment of this application; and

FIG. 9 is a schematic diagram of a structure of a photovoltaic system according to an embodiment of this application.

## DESCRIPTION OF EMBODIMENTS

The following describes technical solutions of this application with reference to accompanying drawings.

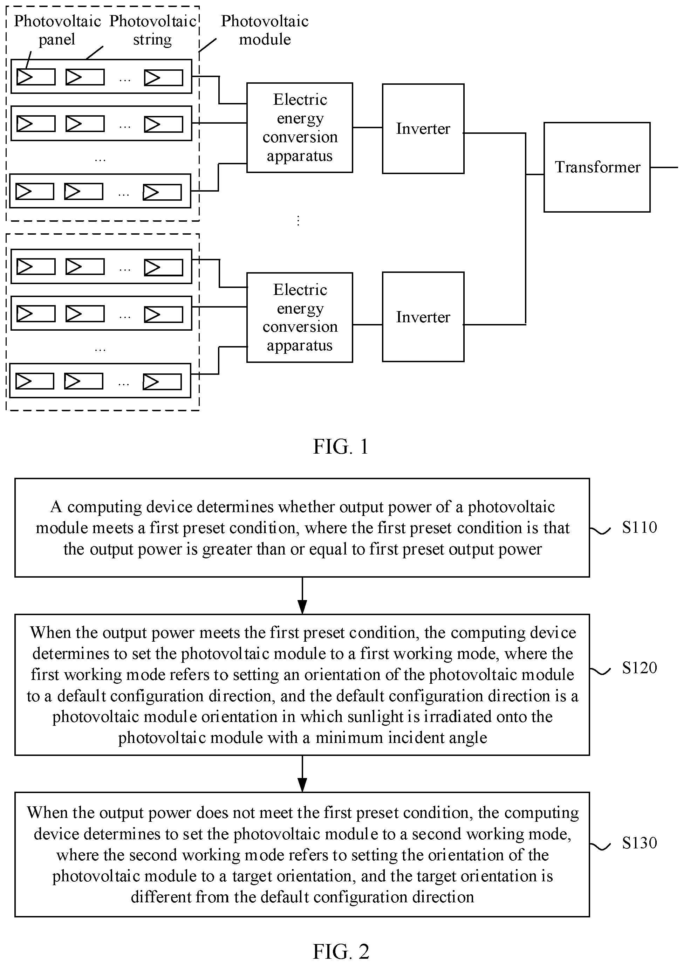

FIG. 1 is a schematic diagram of a structure of a photovoltaic power generation system.

The photovoltaic (photovoltaic, PV) power generation system may include a photovoltaic module, an electric energy conversion apparatus, an inverter, a transformer, and the like.

The photovoltaic module may also be referred to as a photovoltaic array and includes a plurality of photovoltaic strings (PV string). Each photovoltaic string includes a plurality of photovoltaic panels connected in series. The photovoltaic panel is configured to convert light energy into electric energy. The electric energy generated by the photovoltaic panel is a direct current (direct current, DC). A voltage at both ends of the photovoltaic string is equal to a sum of voltages generated by the plurality of photovoltaic panels. Output power of the photovoltaic module may represent electric energy output by the photovoltaic module in a unit time.

An output voltage of the photovoltaic panel is relatively low, and an electrode of the photovoltaic panel that is not packaged is easy to be detached due to influence of an environment. Therefore, a specific quantity of photovoltaic panels need to be sealed into a photovoltaic module in a serial and parallel connection manner, to avoid corrosion of a battery electrode and an interconnect line. In addition, packaging can further avoid breaking of the photovoltaic panel and facilitates outdoor installation.

The electric energy conversion apparatus is configured to perform voltage conversion on a direct current output by the photovoltaic module, and the electric energy conversion apparatus may be understood as a DC-DC converter.

The electric energy conversion apparatus may be located in a combiner box. The combiner box is configured to combine direct currents (there are generally 8, 12, or 16 currents, or the like) generated by the plurality of photovoltaic strings, and input a combined output to the inverter by using a circuit breaker after lightning protection processing. The electric energy conversion apparatus may perform voltage conversion on a direct current before or after the combination.

The inverter is configured to convert an input direct current into an alternating current (alternating current, AC), that is, perform DC-AC conversion. The inverter may also be referred to as a DC-AC converter. It should be understood that the photovoltaic power generation system may include one or more inverters, and each inverter may be configured to perform DC-AC conversion on a direct current output by one or more electric energy conversion apparatuses.

The transformer may be configured to perform voltage conversion on an alternating current, to adjust a voltage value of an input alternating current voltage. It should be understood that both an input and an output of the transformer are alternating currents. The transformer may boost voltages of alternating currents output by a plurality of inverters. An output of the transformer may be connected to a power grid. Usually, the transformer converts a voltage of only one alternating current input. When two split windings are disposed in the transformer, the transformer may convert voltages of two independent alternating current inputs.

In the photovoltaic power generation system, an area of each photovoltaic module is generally fixed, and when light intensity of a light ray remains unchanged, a larger included angle between a light ray irradiated onto the photovoltaic module and a plane on which the photovoltaic module is located, that is, a smaller incident angle of the light ray irradiated onto the photovoltaic module, leads to more electric energy output by the photovoltaic module. When a light ray is vertically irradiated onto the photovoltaic module, that is, when an included angle between the light ray and the plane on which the photovoltaic module is located is 90°, which reaches a maximum value, output power of the photovoltaic module reaches a maximum.

In an ideal weather condition, a solar azimuth may be determined based on a location of the photovoltaic module and a time, and an orientation of the photovoltaic module is adjusted based on the solar azimuth, so that the photovoltaic module faces a direction of the sun. That is, a solar ray is irradiated onto the photovoltaic module with a minimum incident angle, so that intensity of light received by the photovoltaic module may be increased, and input power of the photovoltaic power generation system may be increased, thereby increasing a power generation capacity of the photovoltaic power generation system in unit duration.

However, in a non-ideal weather condition such as an overcast day or a cloudy day, a cloud layer or the like blocks and diffusely reflects solar rays. The photovoltaic module is disposed in a direction in which sunlight is irradiated onto the photovoltaic module with a minimum incident angle, and an incident angle at which a diffusely reflected light ray is irradiated onto a surface of the photovoltaic module changes compared with that in an ideal weather condition such as a sunny day. That is, in the non-ideal weather condition, a direction in which the intensity of the light received by the photovoltaic module is maximized is no longer the direction in which sunlight is irradiated onto the photovoltaic module with a minimum incident angle.

The orientation of the photovoltaic module may be adjusted based on weather data. The weather data may be a weather forecast for a region in which the photovoltaic module is located. The orientation of the photovoltaic module is adjusted based on the weather forecast, and accuracy of the weather forecast seriously affects the power generation capacity of the photovoltaic power generation system in unit duration. However, the weather forecast is generally a forecast for weather in a specific administrative region, and has low geospatial accuracy and poor real-time performance, thereby adversely affecting an increase in the power generation capacity of the photovoltaic power generation system in unit duration.

Alternatively, a meteorological sensor may be installed around the photovoltaic power generation system, data collected by the meteorological sensor is used as weather data, and the orientation of the photovoltaic module is adjusted based on the weather data. The installation of the meteorological sensor increases costs of the photovoltaic power generation system.

To improve power generation efficiency of the photovoltaic power generation system, an embodiment of this application provides a photovoltaic module control method.

FIG. 2 is a schematic flowchart of a photovoltaic module control method according to an embodiment of this application.

The control method is applied to a photovoltaic system, and the photovoltaic system includes a photovoltaic module, an electric energy conversion apparatus, and an inverter. The photovoltaic module is configured to convert light energy into a direct current. The electric energy conversion apparatus is configured to perform voltage conversion on the direct current output by the photovoltaic module. The inverter is configured to convert a direct current output by the electric energy conversion apparatus into an alternating current, and supply power to a power grid.

S110. A computing device determines whether output power of the photovoltaic module meets a first preset condition, where the first preset condition is that the output power is greater than or equal to first preset output power.

Specifically, the computing device may obtain electrical parameter information of the photovoltaic module. The electrical parameter information has an association relationship with the output power, and the electrical parameter information includes at least one of the following: an output current of the photovoltaic module, an output voltage of the photovoltaic module, and the output power.

The computing device determines that the output power meets the first preset condition in at least one of the following cases: the output current is greater than or equal to a preset output current, the output voltage is greater than or equal to a preset output voltage, and the output power is greater than or equal to the first preset output power. In some embodiments, the photovoltaic system includes maximum power point tracking (maximum power point tracking, MPPT). The MPPT may be configured to adjust the output voltage of the photovoltaic module, to increase the output power of the photovoltaic module. To increase the output power of the photovoltaic module, the MPPT limits a decrease in the output power of the photovoltaic module when the output power of the photovoltaic module decreases. In the photovoltaic system including the MPPT, the output current of the photovoltaic module is positively correlated with the output power of the photovoltaic module.

The output voltage of the photovoltaic module may also be positively correlated with the output power of the photovoltaic module.

Therefore, the output current of the photovoltaic module may be compared with the preset output current, or the output voltage of the photovoltaic module may be compared with the preset output voltage, to determine whether the output power of the photovoltaic module meets the first preset condition, thereby providing a more flexible manner for determining whether the output power meets the first preset condition.

S120. When the output power meets the first preset condition, the computing device determines to set the photovoltaic module to a first working mode, where the first working mode refers to setting an orientation of the photovoltaic module to a default configuration direction, and the default configuration direction is a photovoltaic module orientation in which sunlight is irradiated onto the photovoltaic module with a minimum incident angle. S130. When the output power does not meet the first preset condition, the computing device determines to set the photovoltaic module to a second working mode, where the second working mode refers to setting the orientation of the photovoltaic module to a target orientation, and the target orientation is different from the default configuration direction.

The output power of the photovoltaic module is affected by a weather condition. If the output power meets the first preset condition, it may be considered that the weather condition is good, that is, there is an ideal weather condition, and the photovoltaic module is set to the first working mode. If the output power does not meet the first preset condition, it may be considered that the weather condition is relatively poor, that is, there is a non-ideal weather condition, and the photovoltaic module is set to the second working mode.

The photovoltaic module faces a direction, that is, a normal direction of the photovoltaic module is the direction. A surface that is of the photovoltaic module and that receives light energy is perpendicular to the direction. The orientation of the photovoltaic module may also be referred to as the normal direction of the photovoltaic module, and is a direction perpendicular to a surface that is of the photovoltaic module and that is used to receive a light ray. The photovoltaic module may be disposed on a support, and the orientation of the photovoltaic module may be adjusted by adjusting an angle between the support and the horizon. When the orientation of the photovoltaic module is determined based on a transmission direction of sunlight, the support may also be referred to as a tracking support.

In the first working mode, the computing device disposes the photovoltaic module in the default configuration direction.

The default configuration direction may be determined based on a sunlight irradiation direction. The sunlight irradiation direction may also be understood as a transmission direction of a solar ray, and may be determined by using a solar azimuth, a solar elevation angle, or the like.

The sunlight irradiation direction may be measured or calculated. A calculated sunlight irradiation direction may also be referred to as an astronomical direction. An angle between the astronomical direction and a vertical direction is an astronomical angle. When the photovoltaic module is disposed in the astronomical direction, that is, when the normal direction of the photovoltaic module is the astronomical direction, the photovoltaic module faces the sun, and the surface that is of the photovoltaic module and that is used to receive a light ray is perpendicular to a direction of sunlight.

Based on geographical location information of the photovoltaic module, an astronomical direction of a location indicated by the location information at each time point may be determined. Based on the location information of the photovoltaic module and time information, an astronomical direction under the time information may be determined. The location information of the photovoltaic module includes information such as a longitude, a latitude, and an altitude of the location of the photovoltaic module. That is, the astronomical direction may be determined based on a time and the location of the photovoltaic module.

The geographical location of the photovoltaic module may be indicated by using information such as a longitude, a latitude, and an altitude. The time may be indicated by using time information affecting a solar azimuth relative to a point on the ground, such as a date (including a month, a day, and the like) and a moment (including an hour, a minute, and the like). Based on the geographical location of the photovoltaic module, an astronomical direction of the geographical location at any time may be determined.

When light intensity of a light ray remains unchanged, a larger included angle between a light ray irradiated onto the photovoltaic module and a plane on which the photovoltaic module is located leads to a smaller incident angle of the light ray and more electric energy output by the photovoltaic module in a unit time. To increase the output power of the photovoltaic module, the default configuration direction may be the sunlight irradiation direction. That is, the default configuration direction may be the astronomical direction. In this case, an incident angle at which sunlight is irradiated onto the photovoltaic module is 0.

However, in a morning and an evening of a day, shading may occur between photovoltaic modules due to a small solar elevation angle. In this case, the orientation of the photovoltaic module is set to the astronomical direction, and a power generation capacity of the photovoltaic module in a unit time cannot be maximized.

To increase the power generation capacity of the photovoltaic module in a unit time, shading between photovoltaic modules needs to be avoided. The default configuration direction may be obtained by adjusting the astronomical direction based on relative locations between the photovoltaic modules and information such as a size and a shape of each photovoltaic module. The photovoltaic modules disposed in the default configuration direction minimize an incident angle at which sunlight is irradiated onto the photovoltaic modules, when shading between the photovoltaic modules can be avoided.

Therefore, the default configuration direction may be a direction of direct sunlight, or may be obtained by adjusting the direction of direct sunlight, to avoid shading between the photovoltaic modules.

It should be understood that the photovoltaic module may be a double-sided module or a single-sided module. This is not limited in this embodiment of this application. When the photovoltaic module is a double-sided module, the orientation of the photovoltaic module may be an orientation of one side.

The default configuration direction in which sunlight is irradiated onto the photovoltaic module with a minimum incident angle can maximize the output power of the photovoltaic module in ideal weather in which light ray refraction and diffuse reflection are relatively weak. However, in an overcast day condition in which refraction and diffuse reflection are relatively strong, the output power of the photovoltaic module disposed in the default configuration direction cannot reach a maximum value.

The ideal weather may be weather in which a cloud layer is stable and a cloud amount is relatively small. The cloud amount refers to an area of the sky occupied by clouds. The ideal weather may be sunny weather. Generally, weather in which the cloud amount does not exceed 30% is considered as sunny weather.

The output power of the photovoltaic module may reflect a current weather condition. When current output power of the photovoltaic module is relatively small and is less than the first preset output power, the photovoltaic module may no longer be disposed in the default configuration direction.

When the output power of the photovoltaic module is less than the first preset output power, the orientation of the photovoltaic module is adjusted by performing S110 to S130, so that the output power of the photovoltaic module is increased. Therefore, direction adjustment of the photovoltaic module to increase the output power of the photovoltaic module no longer relies on obtaining of weather data, thereby avoiding detection of weather data, and reducing system costs.

There may be a correspondence between the first preset output power and a first time, and the first time is a time at which the photovoltaic module outputs the output power.

That is, the first preset output power may vary with the time. That is, the first preset output power may be different in different time cases.

Light intensity of solar rays greatly varies at different times of a day. For different first times, first preset output power corresponding to the first times is set to eliminate impact of sunlight intensity at different times on the output power of the photovoltaic module, so that the first preset output power can accurately reflect impact of weather on the output power of the photovoltaic module in different time cases. Therefore, determining of the working mode of the photovoltaic module is more accurate.

The output power of the photovoltaic module may be output power of the photovoltaic module at a specific moment, or may be output power of the photovoltaic module in a preset time segment before the moment. This is not limited in this embodiment of this application.

There may be one or more photovoltaic modules in the photovoltaic system. Compared with a manner in which a working mode of one photovoltaic module is determined only based on current output power of the photovoltaic module, an error may be reduced by determining the working mode of the photovoltaic module based on output power of a plurality of photovoltaic modules. The output power of the plurality of photovoltaic modules can more accurately reflect impact of weather on the output power of the photovoltaic modules, thereby improving accuracy of the determined working mode of the photovoltaic module.

It should be understood that, when the working mode of the photovoltaic module is determined by determining whether the output power of the plurality of photovoltaic modules meets the first preset condition, working modes of all or some of the plurality of photovoltaic modules may be determined.

Generally, the photovoltaic system includes a relatively large quantity of photovoltaic modules and covers a large area. The cloud layer may only shade some of the photovoltaic modules in the photovoltaic system from direct sunlight. The photovoltaic modules in the photovoltaic system may be divided into a plurality of groups, and working modes of a plurality of photovoltaic modules in each group may be determined based on whether output power of the photovoltaic modules in the group is greater than or equal to the first preset output power. That is, orientations of some photovoltaic modules in the photovoltaic system may be controlled based on output power of the photovoltaic modules.

It should be understood that each group may correspond to same or different first preset output power. For example, the first preset output power of each group may be determined based on a quantity of photovoltaic modules in the group. Output power of each group may be understood as a sum of output power of all photovoltaic modules in the group.

In the second working mode, the computing device disposes the photovoltaic module in the default configuration direction.

In some embodiments, the target orientation may be a preset direction, for example, a vertical direction. The vertical direction is a direction perpendicular to the horizon.

In some other embodiments, an included angle between the target orientation and the vertical direction may be a product of an included angle between the default configuration direction and the vertical direction and a preset angle coefficient. That is, the computing device may determine a preset angle coefficient k. The computing device may determine the target orientation based on the preset angle coefficient, where an included angle $\alpha$ between the target orientation and the vertical direction is $\alpha = k\beta$, and $\beta$ is the included angle between the default configuration direction and the vertical direction.

The cloud layer or the like blocks and diffusely reflects solar rays. In incident light rays of the photovoltaic module, direct solar rays of the photovoltaic module decrease, and a proportion of light rays in other incident directions, that is, scattered light rays, increases. The scattered light rays are transmitted from space to the ground in all directions. Generally, for a single-sided photovoltaic module disposed in the default configuration direction, a power generation capacity of the photovoltaic module in a unit time can be increased by reducing an included angle between a direction that the photovoltaic module faces and the vertical direction, that is, reducing an included angle between a plane on which the photovoltaic module is located and a horizontal direction.

Generally, for a single-sided photovoltaic module, a value range of the preset angle coefficient may be greater than or equal to 0 and less than or equal to 1. For a double-sided module, a value range of the preset angle coefficient may be greater than 1, due to impact of reflection irradiation received by a rear side.

The preset angle coefficient may be set based on experience. There may be a correspondence between the first time and the preset angle coefficient. There may also be a correspondence between a variance between the output power of the photovoltaic module and the first preset output power and the preset angle coefficient. For example, the preset angle coefficient may decrease as the variance between the output power of the photovoltaic module and the first preset output power increases. A preset angle coefficient corresponding to a current output power status of the photovoltaic module at a current time point may be determined in a table lookup manner.

The variance between the output power of the photovoltaic module and the first preset output power may be indicated by a ratio or a difference between the output power of the photovoltaic module and the first preset output power.

The first preset power may be a product of rated output power of the photovoltaic module and a first preset power coefficient. The variance between the output power of the photovoltaic module and the first preset output power may be indicated by a ratio or a difference between the output power of the photovoltaic module and the rated output power of the photovoltaic module.

In some embodiments, the target orientation may alternatively be determined by using a neural network model.

Specifically, the computing device may process first data by using the neural network model, to obtain the target orientation. The first data includes first time information and electrical parameter information. The electrical parameter information has an association relationship with the output power. The first time information is used to indicate a first time at which the photovoltaic module outputs the output power of the photovoltaic module.

The neural network model is obtained through training based on a data set, the data set includes a plurality of pieces of training data, and each piece of training data includes time training information, electrical parameter training information, and tagged orientation information. The time training information is used to indicate a training time. The electrical parameter training information is used to indicate an electrical parameter of a training photovoltaic module at the training time. The tagged orientation training information is used to indicate a tagged orientation, and the tagged orientation is an orientation of the training photovoltaic module in which output power of the training photovoltaic module reaches a maximum value at the training time.

The electrical parameter training information has an association relationship with training output power output by the training photovoltaic module at the training time.

The neural network model is trained by using the data set, and the neural network model processes the first data to obtain the target orientation, so that accuracy of the target orientation can be improved, and the output power of the photovoltaic module can be further increased.

Each piece of training data may further include geographical location training information. The geographical location training information is used to indicate a geographical location of the training photovoltaic module. At least two pieces of geographical location training information in the plurality of pieces of training data are different. The first data may further include geographical location information of the photovoltaic module, and the geographical location information is used to indicate a geographical location of the photovoltaic module.

It should be understood that different geographical location training information indicates different geographical locations. The data set used to train the neural network model includes different geographical location training information, so that the neural network model can process photovoltaic modules at different locations, and there is no need to separately perform training for a photovoltaic module at a specific location, thereby reducing costs.

The geographical location information of the photovoltaic module affects the target orientation. The first data includes geographical location information of at least one photovoltaic module, so that the determined target orientation is more accurate.

Each piece of training data may further include rated electrical parameter training information of the training photovoltaic module. The rated electrical parameter training information has an association relationship with rated output power of the training photovoltaic module. At least two pieces of rated electrical parameter training information in the plurality of pieces of training data are different. The first data may further include rated electrical parameter information of the photovoltaic module, and the rated electrical parameter information has an association relationship with rated output power of the photovoltaic module.

The data set used to train the neural network model includes different rated electrical parameter training information, so that the neural network model obtained through training may be applicable to photovoltaic modules of different sizes and types, and there is no need to separately perform training for photovoltaic modules of different types, thereby reducing costs.

The rated output power of the photovoltaic module is maximum output power (which can work for a long time) of the photovoltaic module in a normal condition.

It should be understood that there may be one or more training photovoltaic modules. When there are a plurality of training photovoltaic modules, the data set used to train the neural network model includes rated electrical parameter training information corresponding to different quantities of training photovoltaic modules, so that the neural network model obtained through training is applicable to a plurality of quantities of photovoltaic modules.

The electrical parameter training information of the photovoltaic module may be a rated electrical parameter marked by a manufacturer of the photovoltaic module, or may be a rated electrical parameter corresponding to a training time. The rated electrical parameter training information has an association relationship with the rated output power of the training photovoltaic module. There may be a correspondence between the rated output power and the training time, and the rated output power may be rated output power that is of the training photovoltaic module and that corresponds to the training time. For example, rated output power that is of a photovoltaic module and that corresponds to a time is used to indicate maximum output power of the photovoltaic module at the time, that is, a maximum value of output power of the photovoltaic module at the time in various weather conditions when the photovoltaic module is disposed in each direction or the default configuration direction.

That is, the rated electrical parameter training information in the training data may be rated electrical parameter training information corresponding to the training time, and the rated electrical parameter information in the first data may be rated electrical parameter information corresponding to the first time.

In some embodiments, the rated electrical parameter training information may be expressed as a variance between the electrical parameter information of the photovoltaic module and a rated value of the electrical parameter information. Therefore, the rated value of the electrical parameter information may be indicated by using the variance and the electrical parameter information of the photovoltaic module. The variance between the electrical parameter information and the rated value of the electrical parameter information may be a difference between the electrical parameter information and the rated value of the electrical parameter information, or a difference between a ratio of the electrical parameter information to the rated value of the electrical parameter information and 1.

It should be understood that an output of the neural network model may be the target orientation or an angle coefficient. That is, the tagged orientation information in each piece of training data may be the tagged orientation, or may be a ratio of an included angle between the tagged orientation and the vertical direction to an included angle between the default configuration direction and the vertical direction.

Based on the angle coefficient output by the neural network model, the computing device may determine the target orientation with reference to the default configuration direction.

Each piece of training data may further include a training configuration orientation, and the training configuration orientation is an orientation of the training photovoltaic module in which sunlight is irradiated onto the training photovoltaic module with a minimum incident angle at the training time. The first data may further include the default configuration direction.

In some embodiments, each piece of training data may include the training configuration orientation, and does not include the time training information. The first data may include the default configuration direction, and does not include the first time.

The training data includes the time training information, so that data input into the neural network model includes more original information. Therefore, the neural network model obtained through training is more accurate. The target orientation is determined based on the output of the neural network model, so that the output power of the photovoltaic module is higher, thereby increasing a power generation capacity of the photovoltaic system in a unit time.

Each piece of training data may further include information such as a location relationship between the training photovoltaic modules and sizes and shapes of the training photovoltaic modules. The first data may further include information such as a location relationship between the photovoltaic modules and sizes and shapes of the photovoltaic modules. The location relationship between the photovoltaic modules affects mutual sunlight blocking between the photovoltaic modules, and therefore affects a target direction. Therefore, each piece of training data may further include the location relationship between the training photovoltaic modules, so that the neural network model obtained through training may be applicable to a case in which there is shading between photovoltaic modules.

S110 to S130 may be performed when the photovoltaic module is in the first working mode. When the photovoltaic module is in a second working mode, the computing device may determine whether the output power meets a second preset condition. The second preset condition is that the output power is greater than or equal to second preset output power. The second preset output power is greater than the first preset output power.

When the output power meets the second preset condition, the computing device may set the photovoltaic module to the first working mode. When the output power does not meet the second preset condition, the computing device determines to set the photovoltaic module to the second working mode.

If the second preset output power is equal to the first preset output power, a fluctuation of the output power of the photovoltaic module in the vicinity of the first preset output power causes frequent switching of the working mode of the photovoltaic module, thereby causing frequent adjustment of a direction of the photovoltaic module. The second preset output power is set to be greater than the first preset output power, to implement hysteresis control on the direction of the photovoltaic module, thereby avoiding frequent adjustment of the direction of the photovoltaic module caused by a weather fluctuation of a relatively small amplitude or a measurement error.

When there is a correspondence between the first preset output power and the first time, there may also be a correspondence between the second preset output power and the first time. At a same first time, the second preset output power is greater than the first preset output power.

Specifically, in some embodiments, there is a correspondence between the first time and the rated output power of the photovoltaic module. The first preset output power may be a product of a first power coefficient and first rated output power corresponding to the first time, and the second preset output power may be a product of a second power coefficient and the first rated output power corresponding to the first time.

When the photovoltaic module is powered on and runs, the orientation of the photovoltaic module may be neither the default configuration direction nor the target orientation. That is, the photovoltaic module does not run in the first working mode or the second working mode. The photovoltaic module may be first adjusted to face the default configuration direction, that is, set to the first working mode. Then, S110 to S130 are performed.

S110 to S130 may alternatively be performed after the photovoltaic module is powered on. Alternatively, S110 to S130 may be performed when an included angle between the orientation of the photovoltaic module and the default configuration direction is less than a preset angle value; otherwise, the photovoltaic module is disposed in the default configuration direction.

For example, directions that the photovoltaic module may face may be divided into a plurality of direction intervals. When the orientation of the photovoltaic module and the default configuration direction belong to a same direction interval, it may be considered that the angle between the orientation of the photovoltaic module and the default configuration direction is less than the preset angle value.

For example, by using the vertical direction as a boundary, the directions that the photovoltaic module may face may be divided into two direction intervals: eastward and westward. If the orientation of the photovoltaic module is east, and the default configuration direction is also eastward, that is, both the orientation of the photovoltaic module and the default configuration direction belong to the eastward direction interval, the angle between the orientation of the photovoltaic module and the default configuration direction is less than the preset angle value.

Alternatively, the first preset output power of the photovoltaic module may be an output parameter of the photovoltaic module when the photovoltaic module is disposed at the first time in the default configuration direction corresponding to ideal weather.

It should be understood that the photovoltaic module control method provided in this embodiment of this application may be applied to a control system for adjusting the direction of the photovoltaic module by using a single axis, two axes, or the like.

The direction of the photovoltaic module is adjusted by using a single axis, that is, the photovoltaic module is controlled to rotate around a rotating shaft of one dimension. The single axis may be a horizontal single axis or a tilted single axis. A rotating shaft of the horizontal single axis is disposed in the horizontal direction, and the rotating shaft is disposed in a north-south direction, so that the normal direction of the photovoltaic module may change with a location of the sun. A control system using a horizontal single axis horizontally disposed in the north-south direction may also be referred to as a horizontal single axis tracker. There is an angle between a rotating shaft of the tilted single axis and the horizontal direction.

When the direction of the photovoltaic module is adjusted by using a single axis, the default configuration direction may be a direction in which an included angle between a direction perpendicular to a surface that is of the photovoltaic module disposed in the default configuration direction and that is used to receive a light ray and a direction of direct sunlight is minimized.

The direction of the photovoltaic module is adjusted by using two axes, that is, the photovoltaic module is controlled to rotate around rotating shafts of two dimensions. A control system using two axes may also be referred to as a dual axis tracker.

When the direction of the photovoltaic module is adjusted by using two axes, the default configuration direction may be a direction in which an included angle between a direction perpendicular to one surface that is of the photovoltaic module disposed in the default configuration direction and that is used to receive a light ray and a direction of direct sunlight is minimized.

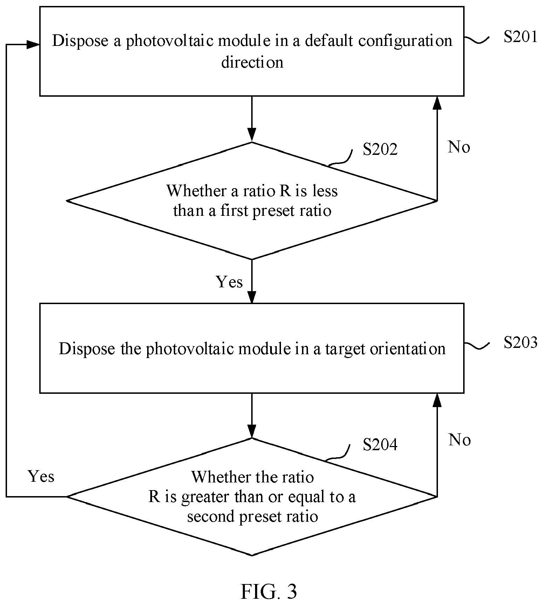

FIG. 3 is a schematic flowchart of a photovoltaic module control method according to an embodiment of this application.

In this embodiment of this application, a photovoltaic system using a horizontal single axis tracker is used as an example for description.

S201. Dispose a photovoltaic module in the photovoltaic system in a default configuration direction.

The default configuration direction may be a photovoltaic module orientation in which an included angle between a normal direction of a surface that is of the photovoltaic module and that is used to receive a light ray and a sunlight irradiation direction is minimized.

In ideal weather, when the photovoltaic module is in the default configuration direction, output power of the photovoltaic module is a maximum.

S202. Determine whether a ratio R of actual output power $P_a$ of the photovoltaic module to rated output power $P_m$ of the photovoltaic module is less than a first preset ratio.

The ratio R of the actual output power $P_a$ to the rated output power $P_m$ is used to indicate a power variance between the actual output power and the rated output power. The power variance may be expressed as a difference between 1 and the ratio of the actual output power to the rated output power:

$$\text{Power variance} = 1 - \frac{p_a}{p_m} = 1 - R$$

That is, the power variance may be expressed as a difference between 1 and the ratio R.

A ratio of actual output power to rated output power of each photovoltaic module may be calculated, and an average value may be calculated to determine a power variance of a plurality of photovoltaic modules. Alternatively, a sum of actual output power and a sum of rated output power of the plurality of photovoltaic modules may be calculated, and then a ratio of the sum of actual output parameters (power) and the sum of rated output parameters (power) may be calculated to determine the power variance.

A variance between actual irradiance and irradiance that is in ideal weather may be reflected by the power variance. Irradiance indicates luminous flux received by a surface of a subject in a unit area.

When the ratio R is greater than or equal to the first preset ratio, it may be considered that weather in which S202 is performed is ideal weather, S201 or S202 is returned to be performed, the photovoltaic module is kept in the default configuration direction, the actual output power is continuously collected, and values of the ratio R and the first preset ratio are determined.

In ideal weather, diffuse reflection of solar rays by particles in the air is relatively weak, and solar rays are directly irradiated onto the photovoltaic module. The photovoltaic module is disposed in the default configuration direction, and a power generation capacity in a unit time is relatively high. When the ratio R is greater than or equal to the first preset ratio, the photovoltaic module may be disposed in the default configuration direction.

When the ratio R is less than the first preset ratio, it may be considered that weather in which S202 is performed is non-ideal weather, and S203 is performed.

In a non-ideal weather condition, diffuse reflection and scattering of solar rays by various particles in the air are relatively strong. Among light rays transmitted to the photovoltaic module, a proportion of solar rays directly irradiated onto the photovoltaic module is relatively small, and a proportion of scattered light rays is relatively large. When the ratio R is less than or equal to the first preset ratio, the orientation of the photovoltaic module may be set to a target orientation corresponding to non-ideal weather.

S203. Dispose the photovoltaic module in the target orientation.

The target orientation may be a product of an included angle between the default configuration direction and a vertical direction and a rotation angle coefficient. Generally, for a single-sided module, the rotation angle coefficient is greater than or equal to 0 and less than 1. For a double-sided module, a value range of the rotation angle coefficient may be greater than 1, due to impact of reflection irradiation received by a rear side.

The rotation angle coefficient may be a fixed value, or may be determined based on one or more of the ratio R, time information, location information of the photovoltaic module, and the like. For example, there may be a correspondence between the rotation angle coefficient and information such as the ratio R and a time.

A smaller ratio R indicates a greater variance between the actual output parameter of the photovoltaic module and the rated output parameter of the photovoltaic module, and stronger diffuse reflection of light rays by particles in the air. For a single-sided module, a smaller ratio R may lead to a smaller rotation angle coefficient.

For different moments in a day, a rotation angle coefficient corresponding to each moment may be set based on experience, so that an orientation of the photovoltaic module at each moment increases a power generation capacity of the photovoltaic module in a unit time.

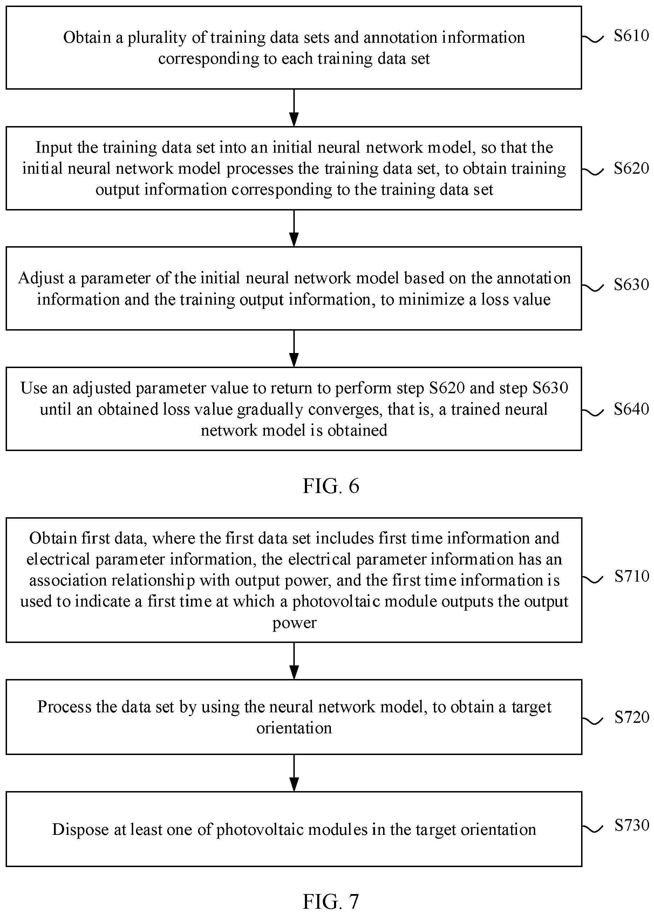

In some embodiments, a neural network model may be used to obtain the target orientation. For a training method of the neural network model, refer to a description of FIG. 6.

When the photovoltaic module is in the target orientation, S204 may be performed.

S204. Determine whether the ratio R of the actual output parameter of the photovoltaic module to a preset output parameter of the photovoltaic module is greater than or equal to a second preset ratio.

It should be understood that the second preset ratio may be greater than the first preset ratio. The second preset ratio is set to be greater than the first preset ratio, and if the orientation of the photovoltaic module is adjusted to the target orientation by using a control manner of non-ideal weather, when the ratio of the actual output power to the rated output power is greater than or equal to the first preset ratio and less than the second preset ratio due to a relatively small fluctuation in a weather condition, the orientation of the photovoltaic module is still controlled by using the control manner of non-ideal weather. That is, the photovoltaic module is still in the target orientation, so that hysteresis control may be implemented, to avoid frequent control manner switching for the orientation of the photovoltaic module caused by a small fluctuation in the weather condition, that is, to avoid frequent adjustment of the orientation of the photovoltaic module between the default configuration direction and the target orientation. When the ratio R is greater than or equal to the second preset ratio, it may be considered that weather in which S204 is performed is ideal weather, and S201 is returned to be performed.

When the ratio R is less than the second preset ratio, it may be considered that weather in which S204 is performed is still non-ideal weather, and S203 is returned to be performed.

By performing S201 to S204, the variance between the actual output power and the rated output power of the photovoltaic module is analyzed in real time, a monitoring device such as a dedicated sensor (for example, an irradiation sensor) does not need to be installed on site, and weather data does not need to be obtained. Therefore, real-time performance is relatively high, accuracy is relatively high, and costs are relatively low. When the variance between the actual output power and the rated output power of the photovoltaic string is relatively large, it is considered that there is non-ideal weather, so that the orientation of the photovoltaic module is adjusted to the target orientation corresponding to non-ideal weather, thereby improving power generation earnings of a photovoltaic station.

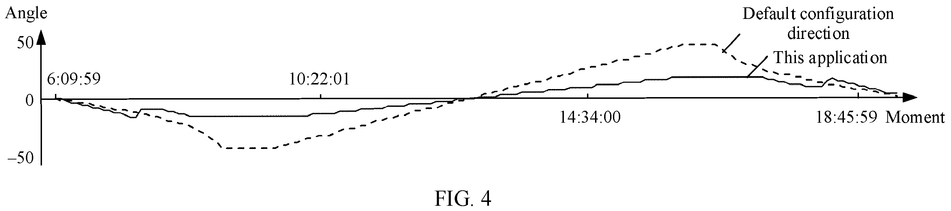

FIG. 4 is a schematic diagram of a photovoltaic module orientation according to an embodiment of this application. In a time in which a photovoltaic module can perform conversion between light energy and electric energy in a day, the photovoltaic module control method shown in FIG. 3 is used to control an orientation of the photovoltaic module, and an angle between the orientation of the photovoltaic module and a vertical direction is shown in FIG. 4.

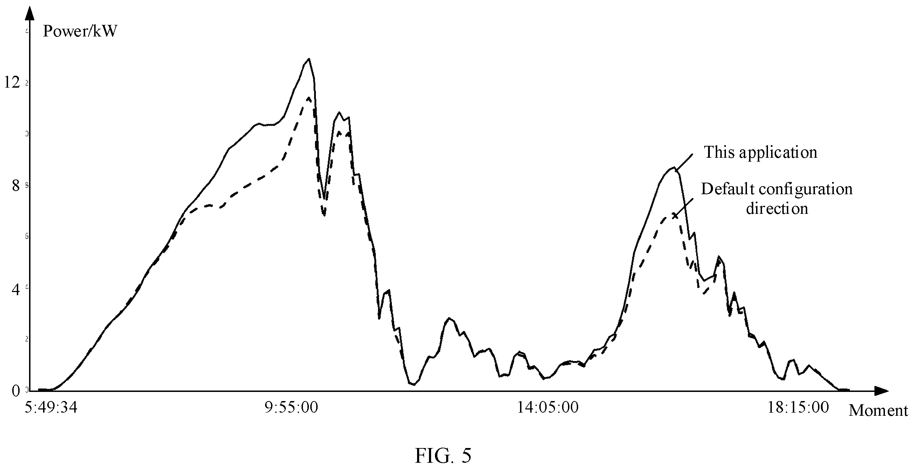

FIG. 5 is a schematic diagram of output power of a photovoltaic module according to an embodiment of this application.

FIG. 5 shows output power of a photovoltaic module in a day when the photovoltaic module is disposed in a default configuration direction in a non-ideal weather condition, and output power of the photovoltaic module when the photovoltaic module control method shown in FIG. 3 is performed to control the photovoltaic module.

In the non-ideal weather condition, compared with the output power of the photovoltaic module when the photovoltaic module is controlled based on the default configuration direction, the output power of the photovoltaic module is significantly increased by performing S201 to S204.

FIG. 6 is a schematic flowchart of a neural network model training method according to an embodiment of this application.

Artificial intelligence (artificial intelligence, AI) is a theory, a method, a technology, and an application system that simulate, extend, and expand human intelligence by using a digital computer or a machine controlled by a digital computer, sense the environment, obtain knowledge, and use the knowledge to obtain a best result. In other words, artificial intelligence is a branch of computer science, and is intended to understand the essence of intelligence and produce a new intelligent machine that can react in a manner similar to human intelligence. Artificial intelligence is to study design principles and implementation methods of various intelligent machines, to enable the machines to have perception, inference, and decision-making functions. Researches in an artificial intelligence field include a robot, natural language processing, computer vision, decision-making and inference, human-computer interaction, recommendation and search, an AI basic theory, and the like.

The neural network may include a neuron. The neuron may be an operation unit that uses $x_s$ and an intercept of 1 as an input. An output of the operation unit may be as follows:

$$h_{W,b}(x) = f(W^T x) = f(\sum_{s=1}^{n} W_s x_s + b)$$

Herein, s = 1, 2, ..., n, n is a natural number greater than 1, $W_s$ represents a weight of $x_s$, b represents a bias of the neuron, and f represents an activation function (activation functions) of the neuron, where the activation function is used to introduce a non-linear characteristic into the neural network, to convert an input signal in the neuron into an output signal. The output signal of the activation function may be used as an input of a next convolutional layer, and the activation function may be a sigmoid function. The neural network is a network constituted by connecting a plurality of single neurons together. To be specific, an output of a neuron may be an input of another neuron. An input of each neural unit may be connected to a local receptive field of a previous layer to extract a feature of the local receptive field. The local receptive field may be an area including several neural units.

An original neural network model may be trained to obtain a trained neural network model. The trained neural network model may be used to determine an orientation of a photovoltaic module.

S610. Obtain a plurality of training data sets and annotation information corresponding to each training data set. Each training data set may include time training information and electrical parameter training information.

In each training data set, the time training information is used to indicate a training time, the electrical parameter training information is used to indicate a training electrical parameter output by a training photovoltaic module at the training time, and the training electrical parameter has an association relationship with training output power output by the training photovoltaic module at the training time.

The electrical parameter training information may include at least one of an output current, output power, and an output voltage of the photovoltaic module at a training moment.

Further, the training data set may further include geographical location training information of the photovoltaic module, and the geographical location training information is used to indicate a geographical location of the training photovoltaic module. The geographical location training information may include a longitude, a latitude, an altitude, and the like, to indicate the geographical location of the training photovoltaic module.

Each training data set may further include geographical location training information of the photovoltaic module. An initial neural network model is trained by using first training information, and a neural network model obtained through training can be used to determine target orientations of photovoltaic modules located at different geographical locations, thereby avoiding repeated training of the neural network model caused by different geographical locations of the photovoltaic modules.

Each training data set may further include rated electrical parameter training information of the training photovoltaic module, and the rated electrical parameter training information has an association relationship with rated output power of the training photovoltaic module.

The annotation information corresponding to each training data set indicates a tagged orientation. The tagged orientation is an orientation of the training photovoltaic module in which output power of the training photovoltaic module reaches a maximum value at the training time.

The annotation information may be a training target orientation corresponding to the training data set, or may be a training angle coefficient. The training target orientation is an orientation of the training photovoltaic module in which the output power of the training photovoltaic module reaches a maximum value. An included angle between a training default configuration direction and a vertical direction multiplied by the training angle coefficient is an included angle between the training target orientation and the vertical direction.

Each training data set may further include a training moment direction, and the training moment direction is used to indicate an orientation of the training photovoltaic module at a training moment.

The training data set further includes the training moment direction, which may make an output of the neural network model more accurate. In an ideal weather condition, the orientation of the photovoltaic module affects an actual output parameter of the photovoltaic module. If a preset training output parameter is used to indicate preset output power when the photovoltaic module is disposed in a default configuration direction in ideal weather, the training data set includes the training moment direction, and the neural network model is trained by using the training data set, so that accuracy of an output result of the neural network model may be improved.

In addition, if the preset training output parameter is used to indicate output power when the photovoltaic module faces the training moment direction in ideal weather, the training moment direction affects the preset training output parameter. The training data set includes the training moment direction, and the neural network model is trained by using the training data set, so that accuracy of an output result of the neural network model may be improved.

The plurality of training data sets and the annotation information corresponding to each training data set may be obtained in various weather conditions, or may be obtained only in a non-ideal weather condition.

S620. Input the training data set into an initial neural network model, so that the initial neural network model processes the training data set, to obtain training output information corresponding to the training data set.

S630. Adjust a parameter of the initial neural network model based on the annotation information and the training output information, to minimize a loss value. The loss value is used to indicate a variance between the training output information and the annotation information.

S640. Use an adjusted parameter value to return to perform step S620 and step S630 until an obtained loss value gradually converges, that is, a trained neural network model is obtained.

FIG. 7 is a schematic flowchart of a photovoltaic module control method according to an embodiment of this application.

The method is applied to a photovoltaic system. The photovoltaic system includes at least one photovoltaic module and at least one inverter, and the inverter is configured to convert a direct current output by the photovoltaic module into an alternating current.

S710. Obtain first data, where the first data set includes first time information and electrical parameter information, the electrical parameter information has an association relationship with the output power, and the first time information is used to indicate a first time at which the photovoltaic module outputs the output power.

The first data may further include geographical location information of the photovoltaic module, and the geographical location information is used to indicate a geographical location of the photovoltaic module.

The first data further includes location information of the photovoltaic module. That is, a neural network model can be used to determine target orientations of photovoltaic modules located at different geographical locations, thereby avoiding repeated training of the neural network model caused by different geographical locations of the photovoltaic modules.

The first data may further include rated electrical parameter information of the photovoltaic module, and the rated electrical parameter information has an association relationship with rated output power of the photovoltaic module. A data set used to train the neural network model includes different rated electrical parameter training information, so that the neural network model obtained through training may be applicable to photovoltaic modules of different sizes and types, and there is no need to separately perform training for photovoltaic modules of different types, thereby reducing costs.

It should be understood that there may be one or more training photovoltaic modules. When there are a plurality of training photovoltaic modules, the data set used to train the neural network model includes rated electrical parameter training information corresponding to different quantities of training photovoltaic modules, so that the neural network model obtained through training is applicable to a plurality of quantities of photovoltaic modules.

Rated electrical parameter training information in training data may be rated electrical parameter training information corresponding to a training time, and the rated electrical parameter information in the first data may be rated electrical parameter information corresponding to the first time.

The first data may further include orientation information, and the orientation information is used to indicate an orientation when the photovoltaic module outputs the output power.

S720. Process the first data by using the neural network model, to obtain a target orientation.

The neural network model may be a neural network model obtained through training by using the neural network training method in FIG. 6.

S730. Dispose at least one of the photovoltaic modules in the target orientation.

By performing S710 to S730, the neural network model is used to process second information that is used to indicate a power variance between an actual output parameter and a preset output parameter and first information that is used to indicate a current default configuration direction, to determine the target orientation of the photovoltaic module and dispose the photovoltaic module in the target orientation. Therefore, direction adjustment of the photovoltaic module no longer relies on obtaining of weather data, thereby avoiding detection of weather data, and reducing system costs.

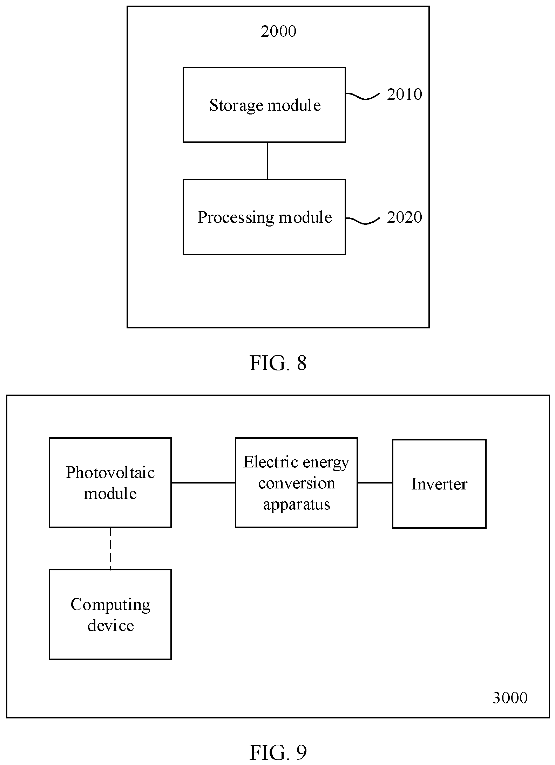

The method embodiments of embodiments of this application are described above with reference to FIG. 1 to FIG. 7, and apparatus embodiments of embodiments of this application are described below with reference to FIG. 8 and FIG. 9. It should be understood that the description of the method embodiments corresponds to the description of the apparatus embodiments, and therefore, for a part that is not described in detail, refer to the foregoing method embodiments.

FIG. 8 is a schematic diagram of a structure of a photovoltaic module control apparatus according to an embodiment of this application.

A control apparatus 2000 is applied to a photovoltaic system, and the photovoltaic system includes at least one photovoltaic module.

The photovoltaic module control apparatus 2000 includes a storage module 2010 and a processing module 2020. The storage module 2010 is configured to store a program, and when the program runs in the processing module 2020, the processing module 2020 is configured to perform the photovoltaic module control method described above.

FIG. 9 is a schematic diagram of a structure of a photovoltaic system 3000 according to an embodiment of this application.

The photovoltaic system 3000 includes a photovoltaic module, an electric energy conversion apparatus, an inverter, and a computing device. The computing device is configured to perform the photovoltaic module control method described above.

An embodiment of this application further provides a computing device, including at least one memory and at least one processor. The at least one memory is configured to store a program, and the at least one processor is configured to run the program, to perform the photovoltaic module control method described above.

The computing device may alternatively be a chip or a processor having a processing function, and the computing device may include a plurality of processors. The processor may be a single-core processor (single-CPU), or may be a multi-core processor (multi-CPU). The chip or the processor having the processing function may be disposed in a sensor, or may not be disposed in the sensor, but disposed at a receive end of a sensor output signal.

The computing device may be an on-site embedded computing platform, a remote server, or a cloud computing platform.

It should be understood that, the processor in embodiments of this application may be a central processing unit (central processing unit, CPU), or may be another general purpose processor, a digital signal processor (digital signal processor, DSP), an application-specific integrated circuit (application-specific integrated circuit, ASIC), a field programmable gate array (field programmable gate array, FPGA), another programmable logic device, discrete gate or transistor logic device, discrete hardware component, or the like. The general purpose processor may be a microprocessor, or the processor may be any conventional processor or the like.

It can be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. In an example instead of limitation, many forms of random access memories (random access memory, RAM) may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The description of the procedure corresponding to each accompanying drawing has respective focuses. For a part that is not described in detail in a procedure, refer to related descriptions in other procedures.

An embodiment of this application further provides a computer readable storage medium. The computer readable storage medium has program instructions. When the program instructions are directly or indirectly executed, the foregoing method is performed.

An embodiment of this application further provides a computer program product including instructions. When the computer program product runs on a computing device, the computing device is enabled to perform the foregoing method, or the computing device is enabled to implement a function of the foregoing apparatus.

An embodiment of this application further provides a chip system. The chip system includes at least one processor. When program instructions are executed in the at least one processor, the foregoing method is performed.

All or some of the foregoing embodiments may be implemented by means of software, hardware, firmware, or any combination thereof. When software is used to implement the embodiments, all or some of the foregoing embodiments may be implemented in a form of a computer program product. The computer program product includes one or more computer instructions or computer programs. When the computer instructions or the computer programs are loaded or executed on a computer, the procedures or functions according to embodiments of this application are completely or partially generated. The computer may be a general purpose computer, a dedicated computer, a computer network, or another programmable apparatus. The computer instructions may be stored in a computer readable storage medium or may be transmitted from a computer readable storage medium to another computer readable storage medium. For example, the computer instructions may be transmitted from a website, computer, server, or data center to another website, computer, server, or data center to another website, computer, server, or data center in a wired (for example, infrared, radio, or microwave) manner. The computer readable storage medium may be any usable medium that can be accessed by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

In embodiments of this application, "at least one" means one or more, and "a plurality of" means two or more. The term "and/or" describes an association relationship for describing associated objects and represents that three relationships may exist. For example, A and/or B may represent: Only A exists, both A and B exist, and only B exists. A and B may be in a singular form or a plural form. The character "/" generally indicates an "or" relationship between the associated objects. "At least one of the following" or a similar expression thereof means any combination of these items, including a singular item or any combination of a plurality of items. For example, "at least one of a, b, and c" may represent a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As shown in the figures, both a computing device and an application that runs on the computing device may be components. One or more components may reside within a process and/or a thread of execution, and the components may be located on one computer and/or distributed between two or more computers. In addition, these components may be executed from various computer readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that units and algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in embodiments of this application may be integrated into one processing unit, or each of the units may exist alone physically, or two or more units are integrated into one unit.

When the functions are implemented in a form of a software function unit and sold or used as an independent product, the functions may be stored in a computer readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A photovoltaic system, wherein the photovoltaic system comprises a photovoltaic module, an electric energy conversion apparatus, an inverter, and a computing device, the photovoltaic module is configured to convert light energy into a direct current, the electric energy conversion apparatus is configured to perform voltage conversion on the direct current output by the photovoltaic module, and the inverter is configured to convert a direct current output by the electric energy conversion apparatus into an alternating current, and supply power to a power grid;

   the computing device is configured to when output power of the photovoltaic module meets a first preset condition, wherein the first preset condition is that the output power is greater than or equal to first preset output power, set the photovoltaic module to a first working mode, wherein the first working mode refers to setting an orientation of the photovoltaic module to a default configuration direction, and the default configuration direction is a photovoltaic module orientation in which sunlight is irradiated onto the photovoltaic module with a minimum incident angle; and
   the computing device is further configured to: when the output power does not meet the first preset condition, set the photovoltaic module to a second working mode, wherein the second working mode refers to setting the orientation of the photovoltaic module to a target orientation, and the target orientation is different from the default configuration direction.

2. The system according to claim 1, wherein

   the computing device is further configured to obtain electrical parameter information of the photovoltaic module, wherein the electrical parameter information has an association relationship with the output power, and the electrical parameter information comprises at least one of the following: an output current of the photovoltaic module, an output voltage of the photovoltaic module, and the output power; and
   that the computing device when output power of the photovoltaic module meets a first preset condition comprises: the output power meets the first preset condition in at least one of the following cases: the output current is greater than or equal to a preset output current, the output voltage is greater than or equal to a preset output voltage, and the output power is greater than or equal to the first preset output power.

3. The system according to claim 1 or 2, wherein the photovoltaic module is a single-sided module;

the computing device is further configured to set a preset angle coefficient k, wherein k is greater than 0 and less than 1; and
the computing device is further configured to set the target orientation based on the preset angle coefficient, wherein an included angle $\alpha$ between the target orientation and a vertical direction is $\alpha = k\beta$, $\beta$ is an included angle between the default configuration direction and the vertical direction, and the vertical direction is a direction perpendicular to the horizon.

4. The system according to claim 1 or 2, wherein when the output power does not meet the first preset condition,

the computing device is further configured to input first data into a neural network model, wherein the first data comprises first time information and electrical parameter information, the electrical parameter information has an association relationship with the output power, and the first time information is used to indicate a first time at which the photovoltaic module outputs the output power;
the computing device is further configured to obtain the target orientation based on an output of the neural network model; and
the neural network model is obtained through training based on a data set, the data set comprises a plurality of pieces of training data, each piece of training data comprises time training information, electrical parameter training information, and tagged orientation information, the time training information is used to indicate a training time, the electrical parameter training information is used to indicate a training electrical parameter of a training photovoltaic module at the training time, the training electrical parameter has an association relationship with training output power output by the training photovoltaic module at the training time, the tagged orientation training information is used to indicate a tagged orientation, and the tagged orientation is an orientation of the training photovoltaic module in which output power of the training photovoltaic module reaches a maximum value at the training time.

5. The system according to claim 4, wherein each piece of training data in the plurality of pieces of training data further comprises geographical location training information, the geographical location training information is used to indicate a geographical location of the training photovoltaic module, and at least two pieces of geographical location training information comprised in the plurality of pieces of training data are different; and
the first data further comprises geographical location information of the photovoltaic module, and the geographical location information is used to indicate a geographical location of the photovoltaic module.

6. The system according to claim 4 or 5, wherein each piece of training data in the plurality of pieces of training data further comprises rated electrical parameter training information of the training photovoltaic module, the rated electrical parameter training information has an association relationship with rated output power of the training photovoltaic module, and at least two pieces of rated electrical parameter training information in the plurality of pieces of training data are different; and
the first data further comprises rated electrical parameter information of the photovoltaic module, and the rated electrical parameter information has an association relationship with rated output power of the photovoltaic module.

7. The system according to any one of claims 1 to 6, wherein there is a correspondence between the first preset output power and the first time, and the first time is a time at which the photovoltaic module outputs the output power.

8. The system according to any one of claims 1 to 7, wherein

the computing device is further configured to: when the photovoltaic module is in the second working mode, when the output power meets a second preset condition, wherein the second preset condition is that the output power is greater than or equal to second preset output power, and the second preset output power is greater than the first preset output power;
the computing device is further configured to: when the output power meets the second preset condition, set the photovoltaic module to the first working mode; and
the computing device is further configured to: when the output power does not meet the second preset condition, set the photovoltaic module to the second working mode.

9. A photovoltaic module control method, applied to a photovoltaic system, wherein the photovoltaic system comprises a photovoltaic module, an electric energy conversion apparatus, and an inverter, the photovoltaic module is configured to convert light energy into a direct current, the electric energy conversion apparatus is configured to perform voltage conversion on the direct current output by the photovoltaic module, and the inverter is configured to convert a direct current output by the electric energy conversion apparatus into an alternating current, and supply power to a power grid;
the method comprises:

when output power of the photovoltaic module meets a first preset condition, wherein the first preset condition is that the output power is greater than or equal to first preset output power set the photovoltaic module to a first working mode, wherein the first working mode refers to setting an orientation of the photovoltaic module to a default configuration direction, and the default configuration direction is a photovoltaic module orientation in which sunlight is irradiated onto the photovoltaic module with a minimum incident angle; and
when the output power does not meet the first preset condition, set the photovoltaic module to a second working mode, wherein the second working mode refers to setting the orientation of the photovoltaic module to a target orientation, and the target orientation is different from the default configuration direction.

10. The method according to claim 9, wherein the method further comprises:

obtaining electrical parameter information of the photovoltaic module, wherein the electrical parameter information has an association relationship with the output power, and the electrical parameter information comprises at least one of the following: an output current of the photovoltaic module, an output voltage of the photovoltaic module, and the output power; and
the output power of the photovoltaic module meets a first preset condition comprises: the output power meets the first preset condition in at least one of the following cases: the output current is greater than or equal to a preset output current, the output voltage is greater than or equal to a preset output voltage, and the output power is greater than or equal to the first preset output power.

11. The method according to claim 9 or 10, wherein the photovoltaic module is a single-sided module, and the method further comprises:

seting a preset angle coefficient k, wherein k is greater than 0 and less than 1; and
setting the target orientation based on the preset angle coefficient, wherein an included angle $\alpha$

between the target orientation and a vertical direction is $\alpha = k\beta$, $\beta$ is an included angle between the default configuration direction and the vertical direction, and the vertical direction is a direction perpendicular to the horizon.

12. The method according to claim 9 or 10, wherein when the output power does not meet the first preset condition, the method further comprises:

inputting first data into a neural network model, wherein the first data comprises first time information and electrical parameter information, the electrical parameter information has an association relationship with the output power, and the first time information is used to indicate a first time at which the photovoltaic module outputs the output power;
setting the target orientation based on an output of the neural network model; and
the neural network model is obtained through training based on a data set, the data set comprises a plurality of pieces of training data, each piece of training data comprises time training information, electrical parameter training information, and tagged orientation information, the time training information is used to indicate a training time, the electrical parameter training information is used to indicate a training electrical parameter of a training photovoltaic module at the training time, the training electrical parameter has an association relationship with training output power output by the training photovoltaic module at the training time, the tagged orientation training information is used to indicate a tagged orientation, and the tagged orientation is an orientation of the training photovoltaic module in which output power of the training photovoltaic module reaches a maximum value at the training time.

13. The method according to claim 12, wherein each piece of training data in the plurality of pieces of training data further comprises geographical location training information, the geographical location training information is used to indicate a geographical location of the training photovoltaic module, and at least two pieces of geographical location training information in the plurality of pieces of training data are different; and
the first data further comprises geographical location information of the photovoltaic module, and the geographical location information is used to indicate a geographical location of the photovoltaic module.

14. The method according to claim 11 or 12, wherein each piece of training data in the plurality of pieces of training data further comprises rated electrical parameter training information of the training photovoltaic module, the rated electrical parameter training information has an association relationship with rated output power of the training photovoltaic module, and at least two pieces of rated electrical parameter training information comprised in the plurality of pieces of training data are different; and

the first data further comprises rated electrical parameter information of the photovoltaic module, and the rated electrical parameter information has an association relationship with rated output power of the photovoltaic module.

15. The method according to any one of claims 9 to 14, wherein there is a correspondence between the first preset output power and the first time, and the first time is a time at which the photovoltaic module outputs the output power.

FIG. 1

A computing device determines whether output power of a photovoltaic module meets a first preset condition, where the first preset condition is that the output power is greater than or equal to first preset output power ~ S110

When the output power meets the first preset condition, the computing device determines to set the photovoltaic module to a first working mode, where the first working mode refers to setting an orientation of the photovoltaic module to a default configuration direction, and the default configuration direction is a photovoltaic module orientation in which sunlight is irradiated onto the photovoltaic module with a minimum incident angle ~ S120

When the output power does not meet the first preset condition, the computing device determines to set the photovoltaic module to a second working mode, where the second working mode refers to setting the orientation of the photovoltaic module to a target orientation, and the target orientation is different from the default configuration direction ~ S130

FIG. 2

Dispose a photovoltaic module in a default configuration direction — S201

Whether a ratio R is less than a first preset ratio — S202 — No

Yes

Dispose the photovoltaic module in a target orientation — S203

Whether the ratio R is greater than or equal to a second preset ratio — S204 — No

Yes

FIG. 3

FIG. 4

EP 4 071 579 A1

FIG. 5

| Obtain a plurality of training data sets and annotation information corresponding to each training data set | $\sim$ S610 |

$\downarrow$

| Input the training data set into an initial neural network model, so that the initial neural network model processes the training data set, to obtain training output information corresponding to the training data set | $\sim$ S620 |

$\downarrow$

| Adjust a parameter of the initial neural network model based on the annotation information and the training output information, to minimize a loss value | $\sim$ S630 |

$\downarrow$

| Use an adjusted parameter value to return to perform step S620 and step S630 until an obtained loss value gradually converges, that is, a trained neural network model is obtained | $\sim$ S640 |

FIG. 6

| Obtain first data, where the first data set includes first time information and electrical parameter information, the electrical parameter information has an association relationship with output power, and the first time information is used to indicate a first time at which a photovoltaic module outputs the output power | $\sim$ S710 |

$\downarrow$

| Process the data set by using the neural network model, to obtain a target orientation | $\sim$ S720 |

$\downarrow$

| Dispose at least one of photovoltaic modules in the target orientation | $\sim$ S730 |

FIG. 7

2000

Storage module 2010

Processing module 2020

FIG. 8

Photovoltaic module

Electric energy conversion apparatus

Inverter

Computing device

3000

FIG. 9

Europäisches
Patentamt

European
Patent Office

Office européen
des brevets

## EUROPEAN SEARCH REPORT

Application Number

EP 22 16 6964

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 111 865 203 A (SHANGHAI BALANSTECH INFORMATION TECH CO LTD) 30 October 2020 (2020-10-30) * figure 3 * * paragraph [0038] – paragraph [0049] * ----- | 1-15 | INV. G05F1/67 ADD. G06N3/02 |
| Y | MOLINA M G ET AL: "Modeling and control of grid-connected photovoltaic energy conversion system used as a dispersed generator", TRANSMISSION AND DISTRIBUTION CONFERENCE AND EXPOSITION: LATIN AMERICA, 2008 IEEE/PES, IEEE, PISCATAWAY, NJ, USA, 13 August 2008 (2008-08-13), pages 1-8, XP031346203, ISBN: 978-1-4244-2217-3 * figure 6 * ----- | 1-15 | |
| A | WO 2019/084454 A1 (FIRST SOLAR INC [US]) 2 May 2019 (2019-05-02) * paragraph [0086] * ----- | 1-15 | |
| A | CN 108 227 759 A (WUXI SHIYI NEW ENERGY INVEST CO LTD) 29 June 2018 (2018-06-29) * claim 5 * ----- | 1-15 | TECHNICAL FIELDS SEARCHED (IPC) H02J H02S G05F G06N |

The present search report has been drawn up for all claims

| Place of search | Date of completion of the search | Examiner |
|---|---|---|
| Munich | 19 August 2022 | Chabas, Julien |

EPO FORM 1503 03.82 (P04C01)

# EP 4 071 579 A1

## ANNEX TO THE EUROPEAN SEARCH REPORT
## ON EUROPEAN PATENT APPLICATION NO.

EP 22 16 6964

This annex lists the patent family members relating to the patent documents cited in the above-mentioned European search report.
The members are as contained in the European Patent Office EDP file on
The European Patent Office is in no way liable for these particulars which are merely given for the purpose of information.

19-08-2022

| Patent document cited in search report | | Publication date | Patent family member(s) | Publication date |
|---|---|---|---|---|
| CN 111865203 | A | 30-10-2020 | NONE | |
| WO 2019084454 | A1 | 02-05-2019 | NONE | |
| CN 108227759 | A | 29-06-2018 | NONE | |

EPO FORM P0459

For more details about this annex : see Official Journal of the European Patent Office, No. 12/82

29